# EUROPEAN PATENT SPECIFICATION

(11) **EP 1 754 536 B1**
(45) Date of publication and mention of the grant of the patent: **24.12.2008**
(21) Application number: 05107504.2
(22) Date of filing: 16.08.2005
(51) Int. Cl.: B01L 3/00, G01N 27/447

(54) **Fluid injection system**
Flüssigkeitseinspritzsystem
Système d'injection de fluide

(43) Date of publication of application: 21.02.2007
(73) Proprietor: Agilent Technologies, Inc., Santa Clara, CA 95051 (US)
(72) Inventor: BEK, Fritz, 76327, Pfinztal (DE); GASSMANN, Marcus, 76227, Karlsruhe (DE)
(74) Representative: Barth, Daniel Mathias

(56) References cited:
- WO-A-02/22878
- US-A- 5 599 432
- US-A1- 2002 008 029
- US-A1- 2002 046 948
- US-A1- 2003 150 733
- US-B1- 6 280 589

## Description

### BACKGROUND ART

The present invention relates to a microfluidic system, and to a method for handling a fluid sample by means of a microfluidic system.

US patent 5,800,690 "Variable Control of Electroosmotic and/or Electrophoretic Forces within a Fluid-Containing Structure via Electrical Forces" to C. Chow et al. relates to a microfluidic system, wherein electrical current or electrical parameters other than voltage are used to control the movement of fluids through the channels of the system. Time-multiplexed power supplies also provide further control over fluid movement by varying the voltage on an electrode connected to a fluid reservoir of the microfluidic system, by varying the duty cycle during which the voltage is applied to the electrode, or by a combination of both.

US patent 6,280,589 "Method for Controlling Sample Introduction in Microcolumn Separation Techniques and Sampling Device" to A. Manz et al. relates to injecting a sample as a sample plug into a sampling device which comprises at least a channel for the electrolyte buffer and a supply and drain channel for the sample. The injection of the sample plug into the electrolyte channel is accomplished electrokinetically by applying an electric field across the supply and drain channels for a time at least long enough that the sample component having the lowest electrophoretic mobility is contained within the geometrically defined volume, such that the injected sample plug reflects the original sample composition. A microfluidic device with sample injector is disclosed in US 2002/0008029 A1. US 5,599,432 describes a microfluidic system for two-dimensional electrophoresis.

Microfluidic devices with the features of the preamble to claim 1 have been provided by Agilent Technologies, e.g. as the Agilent RNA Pico Chips (P.N. 5067-1524) or as described in US 2003/0000835 A1.

### DISCLOSURE

It is an object of the invention to provide a microfluidic system with an improved handling of fluid samples. The object is solved by the independent claim. Preferred embodiments are shown by the dependent claims.

A microfluidic device with the features of claim 1 may be used for realizing various different flow paths. For example, a sample fluid supplied to the first reservoir might be forwarded, via the injection channel, to the injection point. Alternatively, a fluid sample might e.g. be supplied to the second reservoir, and might be moved, via the side channel and a portion of the injection channel, to the injection point. In yet another example, a fluid sample supplied to the first reservoir is transported through a portion of the injection channel before being routed, via the side channel, to the second reservoir.

In case the sample fluid is moved from the first reservoir via the injection channel and the side channel to the second reservoir, a depletion region is formed at the side channel's rear end, in the vicinity of the second reservoir. This depletion region is characterized by a strongly reduced concentration of charged ions, and hence, the depletion region's resistance is rather high. The depletion region starts to be formed at the boundary between the first and the second substance. The longer the microfluidic system is used, the larger the depletion region will become, with a continuously increasing portion of the side channel being occupied by the depletion region. In case of fluids being electrokinetically moved through the microfluidic system, the depletion region's large resistance causes a large voltage drop across the depletion region, which might disturb the applied voltages and/or currents. Another problem is that when the entire side channel is occupied by the depletion region, the depletion region will extend into the injection channel and disturb the flow of sample fluid in the injection channel.

According to invention, the cross section of the side channel is larger than the injection channel's cross section. Due to the increased cross section of the side channel, propagation of the depletion region is slowed down. As a consequence, it takes much longer until the depletion region's front reaches the injection channel and starts disturbing the injection flow path. For this reason, lifetime of the microfluidic system is increased. A large number of measurements may be performed before the microfluidic system has to be replaced by a new microfluidic system. Furthermore, the increased cross section gives rise to a corresponding increase of the depletion region's conductivity. The depletion region's total resistance is reduced, and the voltage drop across the depletion region is decreased. As a consequence, disturbances of the applied voltages and/or currents related to this voltage drop are reduced.

Preferably, the width of the side channel ranges from 80 µm to 500 µm. Further preferably, the width of the injection channel ranges from 10 µm to 150 µm. In one embodiment, the intersection point is located about 0,1 mm to 2 mm upstream of the injection point.

The injection channel and the side channel are at least partly filled with gel, whereas the second reservoir is not filled with gel, but with some kind of buffer solution. When a sample fluid passes the fluid-gel-boundary, the velocity of the sample fluid's compounds is slowed down, and an effect called "stacking" is observed: the size of the sample plug is reduced, and the concentrations of the sample's various components are increased. This effect is highly appreciated, because it allows improving the signal-to-noise ratio of acquired detection signals.

In a further preferred embodiment, the microfluidic system comprises a separation system adapted for separating compounds of a sample fluid, with the sample fluid being supplied to the separation system via the injection channel.

By integrating a separation system on a microfluidic device, the tasks of consecutively separating and analyzing a number of different samples including both reference samples and unknown samples may be performed on one single microfluidic device. Because of the increased width of the side channel, the impact of problems related to the formation of the highly resistive depletion region are reduced. In particular, compared to microfluidic devices of the prior art, an increased number of different samples may be separated and analyzed consecutively before any degradation of the microfluidic system is observed. The microfluidic device's durability is improved, and hence, the cost per measurement is reduced.

In a preferred embodiment, the separation system utilizes at least one of electrophoresis and electrochromatography for separating compounds of a fluid sample. For example, according to a preferred embodiment, the separation system might comprise a gel-filled separation channel adapted for electrophoretically separating the sample's compounds according to their respective mobilities. The separation channel's outlet might be fluidically coupled to a detection unit, in order to detect the various compounds as a function of time.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a microfluidic device comprising a separation system;

Fig. 2 depicts various different flow paths on the microfluidic device;

Fig. 3 illustrates an effect called "stacking";

Fig. 4 shows the formation of a highly resistive depletion region; and

Fig. 5 shows the cross sections of the injection channel and of the side channel.

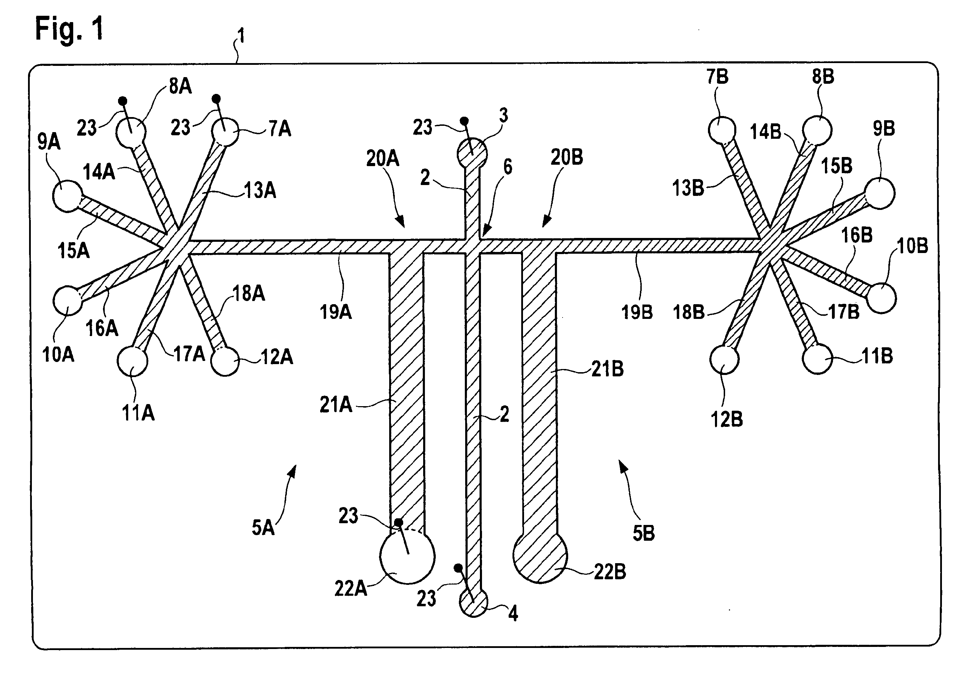

Fig. 1 shows a microfluidic device 1 that is adapted for electrophoretically separating compounds of a fluid sample. For this purpose, the microfluidic chip 1 comprises a separation channel 2 with an upper well 3 and a lower well 4. An injection system 5A on the left side of the microfluidic chip is adapted for injecting precisely sized analyte plugs at an injection point 6. The microfluidic device might further comprise a second injection system 5B located on the microfluidic chip's right side, which is also capable of supplying well-defined analyte plugs. The left-hand side injection system 5A comprises six sample wells 7A to 12A that are fluidically connected, via corresponding channels 13A to 18A, with an injection channel 19A. At an intersection 20A, the injection channel 19A is in fluid communication with a side channel 21A, and with an auxiliary well 22A. The intersection 20A is located at a short distance from the injection point 6. For example, the distance between the intersection 20A and the injection point 6 might be in the range of 0.1 to 2 mm, whereas the length of the injection channel 19A might be in the order of 12 mm.

The right-hand side injection system 5B comprises the same structural elements as the left-hand side injection system 5A. In Fig. 1, the structural elements of the right-hand side injection system 5B have been denoted with reference signs 7B to 22B, respectively.

For manufacturing the microfluidic device 1 shown in Fig. 1, one of the following materials may be used: fused silica, crystalline quartz, fused quartz, plastics, silicon. The wells and channels of the structure shown in Fig. 1 may be micromachined into the substrate using photolithographic procedures followed by some kind of wet etching.

Parts of the general structure shown in Fig. 1 are filled with gel, e.g. with an acrylamide gel. In Fig. 1, the gel-filled parts of the channel system have been indicated with hatching. The electrophoretic separation channel, together with its upper well 3 and its lower well 4 is filled with gel. Furthermore, the channels 13A to 18A, 13B to 18B, the injection channels 19A, 19B and the side channels 21A, 21 B are filled with gel. The sample wells 7A to 12A, 7B to 12B are not filled with gel, but contain some kind of buffer solution. The auxiliary well 22B of the right-hand side injection system 5B is filled with gel, whereas the auxiliary well 22A of the left-hand side injection system 5A does not contain any gel, but is filled with buffer solution.

In order to electrokinetically pump solvents and sample fluids through the channel system, voltages and/or currents may be applied to the wells of the microfluidic chip 1. For this purpose, wire electrodes 23 may be placed in at least some of the wells. Preferably, platinum wire electrodes are employed.

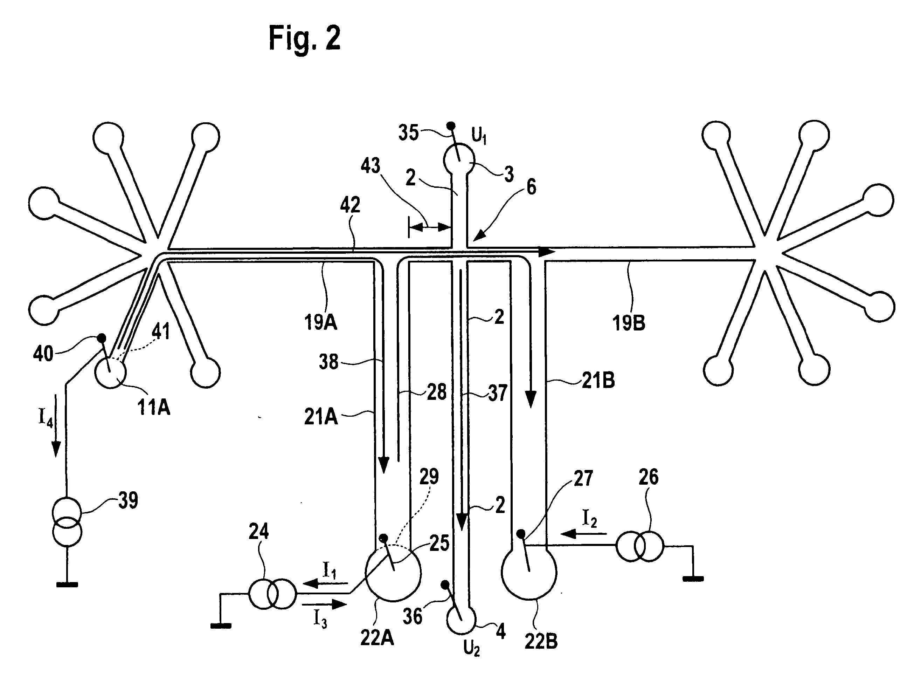

In Fig. 2, it is shown how the microfluidic chip of Fig. 1 can be used for electrophoretically separating compounds of a given sample. In Fig. 2, structural elements corresponding to those shown in Fig. 1 are denoted with the same reference signs as used in Fig. 1.

Before analyzing any sample fluid, a calibration of the electrophoretic separation system is performed. For this purpose, a reference sample comprising a set of well-known compounds is supplied to the auxiliary well 22A. For example, the reference sample might contain a set of negatively charged DNA fragments of different sizes. In order to electrokinetically move the reference sample through the channel system, a first current source 24 is connected to a wire electrode 25 positioned in the auxiliary well 22A, and a second current source 26 is coupled to a wire electrode 27 in the auxiliary well 22B. Both the first current source 24 and the second current source 26 operate against ground.

The first current source 24 withdraws a current l₁ at the wire electrode 25. The second current source 27 provides a current l₂ of equal magnitude to the wire electrode 27. Preferably, the magnitude of the currents l₁, l₂ is in the order of several microampere. Due to the applied currents, the reference sample is moved through the channel system as indicated by arrow 28: the reference sample moves up the side channel 21A, traverses parts of the injection channels 19A, 19B and descends the side channel 21B before being drained off at the auxiliary well 22B.

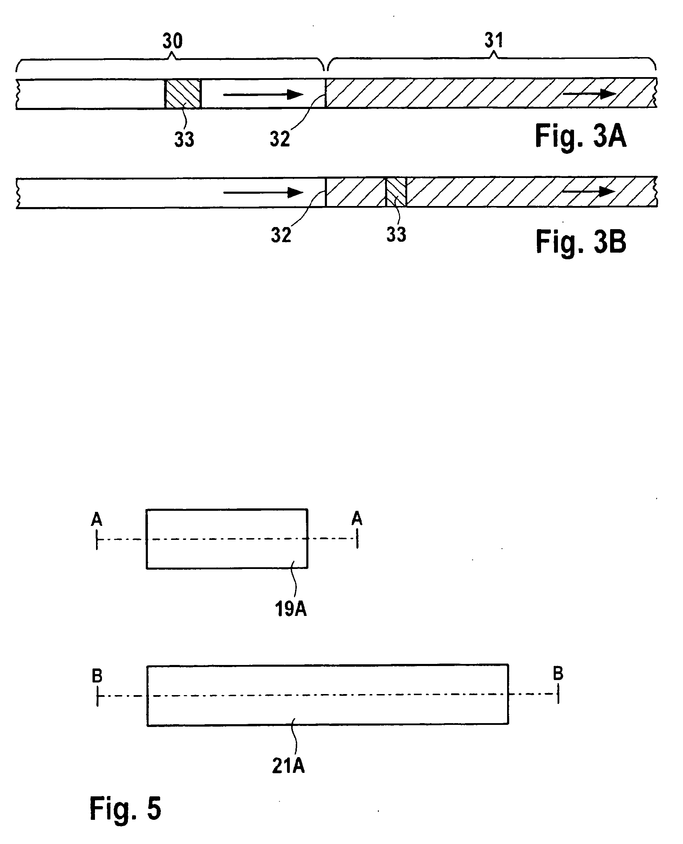

In the following, an effect called "stacking" that occurs at a fluid-gel-boundary 29 between the auxiliary well 22A and the gel-filled side channel 21A will be described in more detail. Fig. 3A shows a portion 30 of a respective well filled with aqueous solution, and a portion 31 of a respective channel that is filled with gel. The two different media are separated by a phase boundary 32. Fig. 3A shows the sample plug 33 before passing the phase boundary 32, and Fig. 3B shows the same sample plug 33 after having passed the phase boundary 32. In the gel phase, the velocity of the sample's compounds is reduced, and the sample plug 33 is compressed. As a consequence, the concentration of sample compounds in the sample plug 33 is increased. This effect, which will furtheron be referred to as "stacking", is appreciated, because it gives rise to an improved signal-to-noise ratio of acquired detection signals.

In the embodiment shown in Figs. 1 and 2, stacking occurs both at the fluid-gel-boundary 29 of the auxiliary well 22A and at fluid-gel-boundaries of the sample wells 7A to 12A, 7B to 12B.

When the reference sample supplied to the auxiliary well 22A has reached the injection point 6, electrophoretic separation is started. For this purpose, a first voltage U₁ is applied to a wire electrode 35 positioned in the upper well 3, and a second voltage U₂ is applied to a wire electrode 36 in the lower well 4. Thus, an electric potential is applied across the separation channel 2, and the components of the reference sample plug injected at the injection point 6 start to move downwards, as indicated by arrow 37. By electrokinetically conveying the reference sample's compounds through the gel-filled separation channel 2, the various compounds are electrophoretically separated according to their respective mobilities. The separation channel's lower well 4 might be fluidically coupled with a detection unit, like e.g. a fluorescence detection unit or an absorbance detection unit. As a result of separating and analyzing the sample's compounds, a series of peaks is obtained as a function of time. The peaks of the reference sample are used for calibrating the separation system.

For analyzing an unknown sample, the sample is supplied to any one of the sample wells 7A to 12A, 7B to 12B. The sample might e.g. contain a variety of different biochemical compounds, like e.g. negatively charged DNA or RNA fragments.

In the example shown in Fig. 2, the sample is provided to the sample well 11A. From the sample well 11A, the sample is electrokinetically moved via the injection channel 19A to the side channel 21A. For this purpose, a further current source 39, which operates against ground, is connected to a wire electrode 40 positioned in the sample well 11A. When the sample passes the fluid-gel-boundary 41 of the sample well 11A, stacking occurs, and the sample's concentration is increased. For electrokinetically moving the sample fluid in the direction indicated by arrow 38, the first current source 24 supplies a current l₃ to the wire electrode 25, while the current source 39 withdraws a current l₄ at the wire electrode 40, with the currents l₃ and l₄ being of equal magnitude.

As long as the separation channel 2 is not available yet, the sample fluid may be conveyed to the side channel 21A, as indicated by arrow 38. As soon as the separation channel 2 becomes available, voltages and/or currents applied to the various electrodes are switched in a way that the flow of sample fluid is redirected towards the injection point 6, as indicated by arrow 42. By switching from the flow path indicated by arrow 38 to the flow path indicated by arrow 42, the sample fluid can be provided to the injection point 6 with a rather small delay. This delay is mainly determined by the distance 43 between the intersection 20A and the injection point 6. In fact, the distance 43, which is approximately equal to 0.1 mm to 2 mm, is much smaller than the length of the injection channel 19A, which might e.g. be equal to 12 mm.

When the sample fluid reaches the injection point 6, a sample plug of well-defined size is injected to the separation channel 2. Voltages U₁, U₂ are applied to the wire electrodes 35, 36 of the upper and the lower well 3, 4, in order to electrophoretically separate the sample fluid's compounds. After traversing the separation channel 2 in the direction indicated by arrow 37, the various compounds arrive successively at the lower well 4, which is fluidically coupled to a detection unit. There, peaks related to various moieties contained in the sample may be recorded as a function of time.

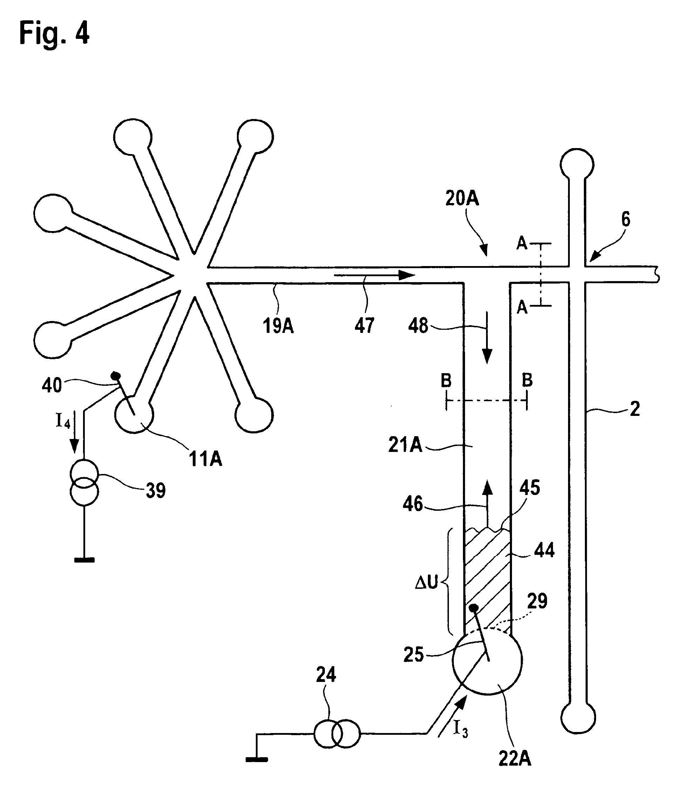

Fig. 4 shows the step of moving a sample fluid supplied to the sample well 11A via the injection channel 19A to the side channel 21A in more detail. By supplying a current l₃ to the wire electrode 25 and withdrawing a current l₄ at the wire electrode 40, the sample fluid's compounds are moved in the direction indicated by arrow 38. However, as a consequence of applying the currents l₃, l₄, a highly resistive depletion region 44 is formed starting at the fluid-gel-boundary 29. As long as the currents l₃, l₄ are applied, the size of the depletion region 44 will grow, whereby the depletion region's front 45 slowly moves upwards with a propagation speed 46. The formation of the depletion region 44 can be understood as follows: at the lower end of the side channel 21A, small anions like e.g. Cl⁻, which are highly mobile, tend to quickly move towards the positively charged auxiliary well 22A. In turn, only a few positively charged cations, like e.g. Na⁺, migrate from the auxiliary well 22A into the gel-filled side channel 21A. As a result, the concentration of charged ions in the lower part of the side channel 21A decreases, and a steadily growing depletion region 44 is formed. In the article "Formation of a resistive region at the anode end in DNA capillary electrophoresis" by Olga Bilenko at al., Electrophoresis, 24, 7-8 (April, 2003), pp. 1176-1183, the formation of the resistive depletion region is described in more detail.

The decreased concentration of charged ions in the depletion region 44 gives rise to an increased resistance of the depletion region 44, and hence, the voltage drop ΔU across the depletion region 44 is increased as well. In order to supply the predefined currents l₃, l₄ to the wire electrodes 25, 40, the current sources 24, 39 have to increase the voltages supplied to the wire electrodes 25,40, which might lead to problems. In the course of the measurements, the size of the depletion region 44 increases continuously, and hence, also the voltage drop ΔU across the depletion region 44 steadily increases, which makes the problem even worse. Another point is that if the depletion region's front 45 gets close to the intersection 20A, it will start to disturb the flow of sample fluid in the injection channel 19A. Therefore, as soon as the depletion region's front 45 reaches the intersection 20A, the electrophoretic separation devices must not be used anymore.

According to the present invention, it is proposed to increase the cross section of the side channel 21A relative to the cross section of the injection channel 19A. Preferably, the cross section of the side channel 21A is chosen 2 to 10 times as large as the cross section of the injection channel 19A. For example, in case all the channels have the same depth, the width of the side channel 21A might be chosen 2 to 10 times as large as the width of the injection channel 19A.

Fig. 5 shows both the cross section of the injection channel 19A along line A-A and the cross section of the side channel 21A along line B-B. In the example shown in Fig. 5, the injection channel 19A and the side channel 21A both have a depth of 13 µm. The width of the injection channel 19A is equal to ca. 36 µm, whereas the width of the side channel 21A is equal to ca. 80 µm.

Due to the increased cross section of the side channel 21A, a fluid's velocity in the side channel 21A is reduced relative to the fluid's velocity in the injection channel 19A. For example, if sample fluid is conveyed through the channel system as indicated by arrow 38, the fluid's velocity 47 in the injection channel 19A is considerably larger than the fluid's velocity in the side channel 21A. Furthermore, due to the increased cross section of the side channel 21A, the expansion of the depletion region 44 is slowed down. The propagation speed 46 of the depletion region's front 45 is decreased in accordance with the increase of the side channel's width. As a consequence, in embodiments of the present invention, it takes much longer until the depletion region's front 45 gets close to the intersection 20A. Therefore, an increased number of different sample fluids can be analyzed before the depletion region 44 starts to disturb the flow of sample fluid in the injection channel 19A. Another advantage of the geometry shown in Fig. 4 and Fig. 5 is that the voltage drop ΔU across the depletion region 44 is considerably reduced. The reason for the decrease of the depletion region's overall resistance is that the length of the depletion region 44 is reduced, whereas the depletion region's cross section is increased. Thus, the operating conditions of the current sources 24, 39 are improved.

## Claims

1. A microfluidic system comprising
a first reservoir (7A-12A);
an injection channel (19A) fluidically coupled to the first reservoir (7A-12A) and to an injection point (6) adapted for injecting an amount of fluid; and
a side channel (21A) fluidically coupled to the injection channel (19A) at an intersection point (20A) located between the first reservoir (7A-12A) and the injection point (6), the side channel (21A) being fluidically coupled with a second reservoir (22A);
wherein both the injection channel (19A) and the side channel (21A) are at least partly filled with a gel, and the second reservoir (22A) is at least partly filled with a buffer solution,
**characterized in that**
the side channel's cross section is larger than the injection channel's cross section.

2. The microfluidic system of claim 1, further comprising a separation system adapted for receiving, via the injection point, the amount of fluid, and for separating compounds of a received fluid.

3. The microfluidic system of the preceding claim, wherein the separation system is one of an electrophoresis or electrochromatography separation system.

## Patentansprüche

1. Mikrofluidsystem, das aufweist:
ein erstes Reservoir (7A bis 12A);
einen Einspritzkanal (19A), der über eine Flüssigkeit mit dem ersten Reservoir (7A bis 12A) und einem Einspritzpunkt (6) verbunden ist, der zum Einspritzen einer Flüssigkeitsmenge dient; und
einen Seitenkanal (21A), der an einem zwischen dem ersten Reservoir (7A bis 12A) und dem Einspritzpunkt (6) befindlichen Kreuzungspunkt (20A) über eine Flüssigkeit mit dem Einspritzkanal (19A) verbunden ist, wobei der Seitenkanal (21 A) über eine Flüssigkeit mit einem zweiten Reservoir (22A) verbunden ist;
wobei sowohl der Einspritzkanal (19A) als auch der Seitenkanal (21A) zumindest teilweise mit einem Gel und das zweite Reservoir (22A) zumindest teilweise mit einer Pufferlösung gefüllt sind,
**dadurch gekennzeichnet, dass**
der Querschnitt des Seitenkanals größer ist als der Querschnitt des Einspritzkanals.

2. Mikrofluidsystem nach Anspruch 1, das ferner ein Trennsystem zum Aufnehmen der Flüssigkeitsmenge über den Einspritzpunkt und zum Trennen von Verbindungen einer aufgenommenen Flüssigkeit aufweist.

3. Mikrofluidsystem nach dem vorhergehenden Anspruch, wobei es sich bei dem Trennsystem um ein Elektrophorese- oder um ein Elektrochromatographie-Trennsystem handelt.

## Revendications

1. Système microfluidique comprenant :
un premier réservoir (7A-12A) ;
un canal d'injection (19A) couplé par un fluide au premier réservoir (7A-12A) et à un point d'injection (6) adapté pour injecter une certaine quantité de fluide ; et
un canal latéral (21 A) couplé par un fluide au canal d'injection (19A) à un point d'intersection (20A) situé entre le premier réservoir (7A-12A) et le point d'injection (6), le canal latéral (21A) étant couplé par un fluide à un second réservoir (22A) ;
dans lequel tant le canal d'injection (19A) que le canal latéral (21A) sont au moins partiellement remplis au moyen d'un gel, et le second réservoir (22A) est au moins partiellement rempli au moyen d'une solution tampon,
**caractérisé en ce que**
la coupe transversale du canal latéral est plus grande que la coupe transversale du canal d'injection.

2. Système microfluidique suivant la revendication 1, comprenant en outre un système de séparation adapté pour recevoir, par le biais du point d'injection, la quantité de fluide, et pour séparer les composants d'un fluide reçu.

3. Système microfluidique suivant la revendication précédente, dans lequel le système de séparation est un système de séparation par électrophorèse ou par électrochromatographie.
